# EUROPEAN PATENT APPLICATION

(11) **EP 3 346 800 A1**
(43) Date of publication of application: **11.07.2018**
(21) Application number: 16840868.0
(22) Date of filing: 28.04.2016
(51) Int. Cl.: H05B 6/40, C21D 1/10, C21D 9/40, C21D 11/00, C21D 1/42, H05B 6/10, H05B 6/36, H05B 6/44

(54) **SYSTEM AND METHOD FOR HARDENING METAL RINGS BY INDUCTION**

(30) Priority: 04.09.2015 ES 201531270
(71) Applicant: GH Electrotermia, S.A., 46184 San Antonio de Benageber (Valencia) (ES)
(72) Inventor: MORATALLA MARTÍNEZ, Pedro, 46184 San Antonio de Benagéber (Valencia) (ES)
(74) Representative: Ungria López, Javier
(86) International application number: PCT/ES2016/070326
(87) International publication number: WO 2017/037312

(57) **Abstract**

System and method for induction hardening of metal rings, which comprises: two heads, each of which is attached to an induction medium; a system for vertical approximation of the two induction media to the metal ring; a system for horizontal approximation of the induction media to walls of an internal surface of the metal ring, and an oscillating circuit, where the system is configured so that: the system of vertical approximation displaces simultaneously in a vertical direction the two induction media until they are introduced into the metal ring; the system of horizontal approximation separates the two induction media from each other in a horizontal direction to bring each induction medium closer to the walls of the inner surface of the metal ring to heat it for a pre-established time, and to displace vertically the two induction media simultaneously until they reach a shower position to obtain the hardening of the metal ring.

## Description

### OBJECT OF THE INVENTION

The object of this invention refers to a new system and a new method for induction hardening of rings.

It finds special application in the aerospace and automotive industries, forging, railways, naval construction, etc.

### TECHNICAL PROBLEM TO ADDRESS AND BACKGROUND OF THE INVENTION

Nowadays, there are a multitude of processes developed to carry out induction hardening of parts, specifically outer rings (metal rings which are components of a vehicle's transmission system). These parts have specific areas where induction hardening is applied, with the possibility of varying the length and depth of the hardening according to the model.

Traditionally, the induction hardening of metal ring parts follows the method described below:
- Step 1.- The coil is brought close to the part in a vertical direction.
- Step 2.- Once the coil is brought close vertically, it is displaced horizontally to bring it closer to the walls of the inner surface of the part.
- Step 3.- Heat the volume to be hardened for a pre-established time until the austenitizing temperature is reached.
- Step 4.- Displace the coil horizontally and vertically until it reaches the shower position.
- Step 5.- Shower the part (cool it) for the time necessary to obtain the hardening.

In the method described above, the coil (a single coil) which is inserted in the part to be heated has a diameter which is smaller than the internal diameter of the part; consequently, as the coil-part distance is high, the coil has to be displaced horizontally to move it closer to the walls of the part and thus heat the interior surface of the part uniformly. However, when the coil is brought closer to some walls of the interior surface it moves further away from others, thus inevitably losing efficiency.

The drawbacks of the above process are explained below:
1. Inefficient coil. The greater part of the coil works with a high coil-part distance, which means that the majority of the energy is absorbed by the coil itself.
2. Reduced activity time. Because the coil has only a small effective section (120 degrees) facing the track of the part, the power density must be high, and the time the coil is working on the part must be reduced, to avoid possible overheating.
3. Long total heating times. It is necessary to use long heating times so as not to overheat the surface, given the reduced time the coil is working on the part.
4. Short useful life of the coil. Because it works at a relatively long distance from the part, the magnetic concentrator undergoes high thermal stress, thereby reducing its useful life.

However, the system of this invention, as shall be seen later, instead of comprising a single coil, comprises two half coils arranged opposite each other, which separate horizontally from each other using a system of horizontal approximation; this way, each half coil can be brought as close as possible to the walls of the interior surface of the metal ring to be heated, in such a way that the distance between each half coil and the part is very small, making the efficiency of the heating process high.

Therefore, this invention solves the aforementioned problems of the state of the art, providing a system and a method with the following advantages:
1. The new coil, formed of two half coils, allows greater heating efficiency. The coil-part distance is very small, allowing the energy to be transmitted to the part with high efficiency.
2. High activity time. The effective section (300 degrees) of the two half coils facing the track of the part is greater and consequently, because it has more effective section, the power density can be smaller and the activity time of the part with the coil can be greater, thereby avoiding possible overheating.
3. Reduced total heating times. Because more energy can be applied to the part in the same time, the heating time can be reduced.
4. Long life. The lifetime of the part and the coil is greater, as the density of the current and the thermal stress are reduced by increasing the efficiency and having the coil working closer to the part.

### DESCRIPTION OF THE INVENTION

A first object of the invention refers to a system for induction hardening of metal rings, which comprises: two heads arranged opposite each other, where each head is attached to an induction medium; a system of simultaneous vertical approximation of the two heads together with the two induction media to the metal ring; a system of simultaneous horizontal approximation of the two heads together with the two induction media to walls of an internal surface of the metal ring; an oscillating circuit connected to the two induction media, which fixes a working frequency for the system, where the system is configured so that: the system of vertical approximation displaces simultaneously in a vertical direction the two induction media until they are introduced into the metal ring; the system of horizontal approximation separates the two induction media from each other in a horizontal direction to bring each induction medium closer to the walls of the inner surface of the metal ring to heat it for a pre-established time, and to displace vertically the two induction media simultaneously until they reach a shower position to obtain the hardening of the metal ring.

The system of vertical approximation comprises first guiding means to displace each head vertically with its respective induction medium, and the system of horizontal approximation comprises second guiding means to displace horizontally each head with its respective induction medium.

Each induction medium comprises at its lower end a showering device.

A second object of the invention refers to a method for induction hardening of metal rings which uses the previous system, comprising the following phases: displacing simultaneously in a vertical direction using a system of vertical approximation the two heads arranged opposite each other, each with its respective induction medium, until both opposing induction media are introduced into the metal ring to be heated, where said induction media are at rest; bringing the two induction media horizontally closer to the walls of the inner surface of the metal ring using the system of horizontal approximation; injecting current into the two induction media to heat the metal ring for a pre-established time until the austenitizing temperature is reached; returning both induction media to the rest position and displacing them vertically and simultaneously until they reach the shower position; and showering the metal ring with the two showering devices until hardening is achieved.

### BRIEF DESCRIPTION OF THE FIGURES

To complete the description and in order to give a better understanding of the characteristics of the invention, this descriptive report is accompanied by a series of drawings that are an integral part of the report, wherein, for illustration purposes and without limitation, the following has been represented:

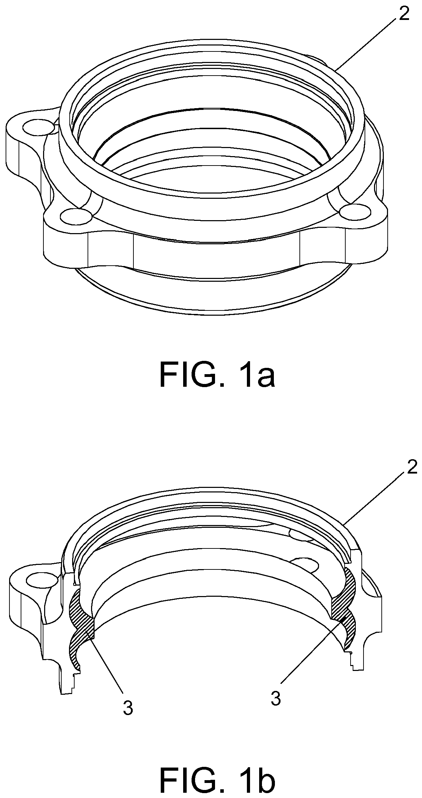

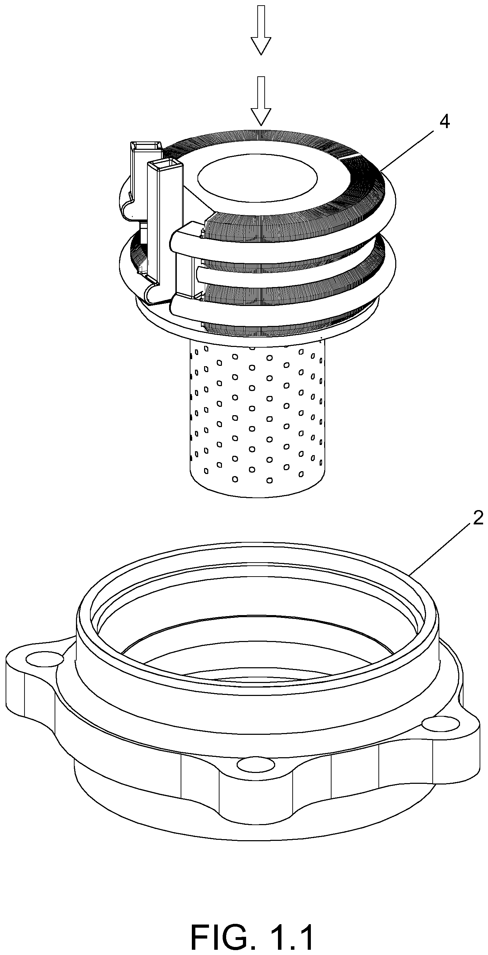

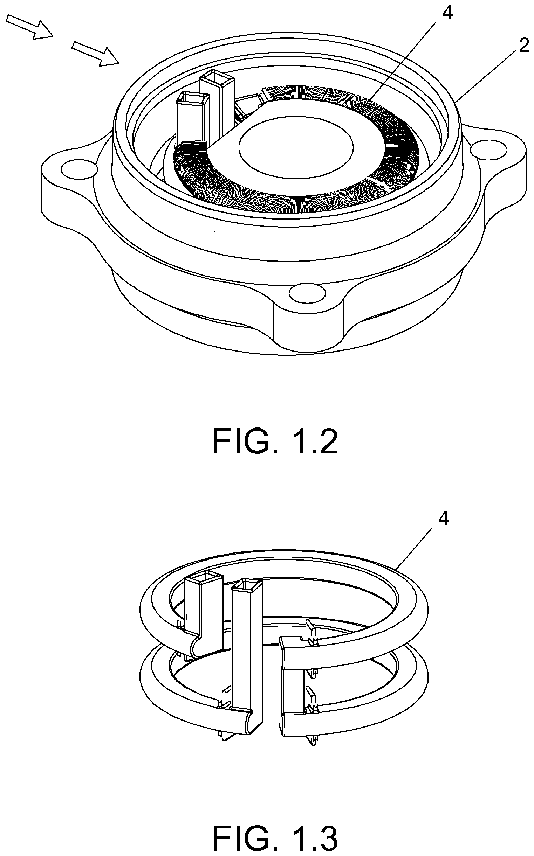

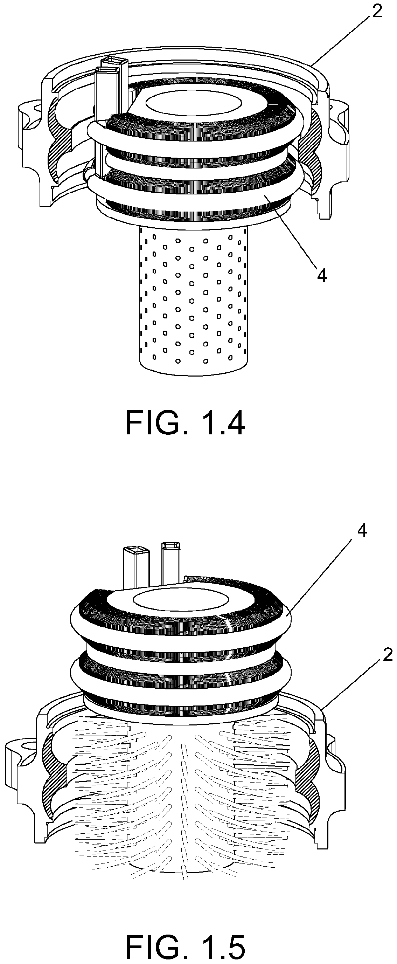

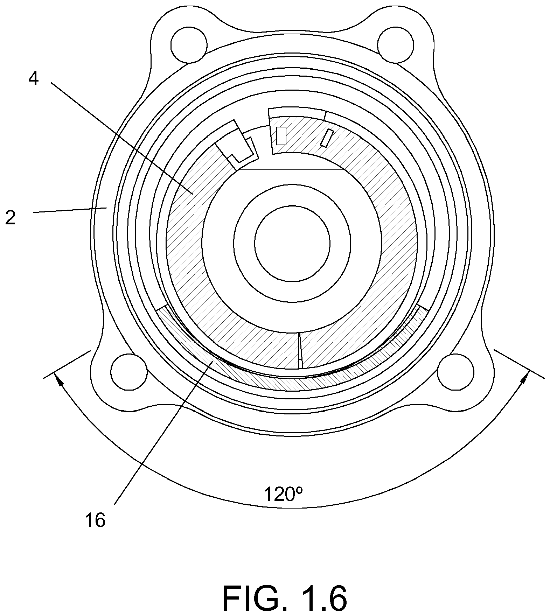

Figure 1a. Shows the metal ring, component of a vehicle transmission system, the object of the induction hardening.
Figure 1b. Shows the susceptible areas of the metal ring on which the induction hardening is to be carried out, in which the length and depth of the hardening may vary according to the model.
Figure 1.1. Shows a conventional inductor moving closer to the metal ring in a vertical direction.
Figure 1.2. Shows the conventional inductor now inserted into the metal ring. It can be seen how the diameter of the inductor is smaller than the inner diameter of the metal ring so that can mechanical interferences can be freed; this means that the conventional inductor has to move horizontally to move closer to the walls of the inner surface of the metal ring.
Figure 1.3. Shows in detail the design of the conventional inductor.
Figure 1.4. Shows the heating of the susceptible areas of the metal ring for a pre-established time until the austenitizing temperature is reached, where it can be seen how the conventional inductor moves closer to the inner right wall to heat it, and has to move away from the inner left wall.
Figure 1.5. Shows how the conventional inductor is displaced horizontally and vertically until it reaches the shower position, until hardening is obtained.
Figure 1.6. Shows the effective section (120 degrees) of the conventional inductor facing the track of the metal ring.
Figure 2. Shows half of the system for induction hardening of this invention, where the whole of the vertical approximation system and the horizontal approximation system can be seen together with one of the heads, where each head is attached to an induction medium. In turn, the induction medium is attached to a shower device.
Figure 2.1. Shows how the two induction media opposite each other descend and are introduced into the metal ring to be heated, with said induction media in the rest position.
Figure 2.2. Shows how the two induction media opposite each other are separated horizontally from each other, thanks to the system of horizontal approximation, in such a way that each induction medium is brought as close as possible to the walls of the inner surface of the metal ring to be heated.
Figure 2.3. Shows the two induction media in the working position, i.e. once expanded and very close to the walls of the metal ring to be heated.
Figure 2.4. Shows how the two induction media, having returned to the rest position, are displaced vertically and simultaneously until they reach the shower position.
Figure 2.5. Shows how the metal ring is showered until hardening is obtained.
Figure 2.6. Shows the oscillating circuit.
Figure 2.7. Shows the effective section (300 degrees) of the induction media of this invention facing the track of the metal ring.

A list of the different components that have been represented in the figures and that comprise the invention is detailed below:
1. System for induction hardening of rings.
2. Metal ring.
3. Susceptible areas of the metal ring.
4. Conventional inductor.
5. Head.
6. Induction medium.
7. Quenching shower device.
8. Vertical approximation system.
9. Horizontal approximation system.
10. First guiding means.
11. Second guiding means.
12. Oscillating circuit.
13. Condensers.
14. Output transformers.
15. Current generator.
16. Effective section the conventional inductor facing the track of the metal ring.
17. Effective section of the two induction media facing the track of the metal ring.
18. Current transformer.

### DETAILED DESCRIPTION

The object of this invention refers to a system (1) and a method developed for the induction hardening of metal rings.

The system (1) for induction hardening of metal rings (2) comprises:
- a current generator (15): which converts the energy obtained from the electricity grid into a medium or high frequency signal suitable for powering the system (1);
- an oscillating circuit (12): which fixes the system working frequency (1), allowing the heating to present characteristics which are in tune with the process to be achieved.

Essentially, the oscillating circuit (12) comprises one or more condensers (13), the number and type of which depends on the electrical characteristics of the oscillating circuit (12) to be established, and a current transformer (18);
- output transformers (14): defines the multiplication factor of the inductor impedance and, together with the condensers (13), fixes the operating frequency of the oscillating circuit (12). In this case, two output transformers are used (14);
- two heads (5) arranged opposite each other, where each head (5) is attached to an induction medium (6), where said induction media (6) are responsible for heating the susceptible areas (3) of the walls of the inner surface of the metal ring (2). In turn, each induction medium (6) is attached to a quenching shower device (7);
- a system of vertical and simultaneous approximation (8) of the two heads (5) together with the two induction media (6) to the metal ring (2) to be heated: Responsible for performing the vertical movement of the set of inductors (6) and output transformers (14). Comprises first guiding means (10), preferably guides, to displace each head (5) with its respective induction medium (6) in a vertical direction;
- a system of horizontal and simultaneous approximation (9) of the two heads (5) together with the two induction media (6) to the metal ring (2) to be heated: Responsible for performing the horizontal movement of the set of inductors (6) and output transformers (14). Comprises second guiding means (11), preferably guides, to displace each head (5) with its respective induction medium (6) in a horizontal direction;
wherein:
- in a first step, the first guiding means (10) of the vertical approximation system (8) allow the two heads (5) arranged opposite each other, each with its respective induction medium (6), to be displaced simultaneously and vertically until both induction media (6) opposite each other are introduced into the metal ring (2) to be heated, where said induction media (6) are in the rest position (so close to each other that it might be a single inductor).
- in a second step, the second guiding means (11) of the horizontal approximation system (9) allow the two heads (5) arranged opposite each other, together with the two induction media (6), to be separated and opened, in such a way that each induction medium (6) moves closer to the walls of the inner surface of the metal ring (2) to be heated for a pre-established time until the austenitizing temperature is reached. Subsequently, once said induction media (6) return to the rest position, they are displaced vertically and simultaneously until they reach the shower position to obtain hardening of the metal ring (2).

As each induction medium (6) is attached in turn to a shower device (7), it is obvious that the two shower devices (7) make the same movements as the induction media (6) and the two heads (5).

The two shower devices (7) are metal or polymer parts which have been drilled with holes so that liquid can be projected onto the surface to be cooled.

Part of the oscillating circuit (12) (condensers (13) and current transformer (18)) is located, generally, in the current generator cupboard (15). The current transformer (18) allows the charge to be adapted to the output power of the current generator (15).

The power received by each induction medium (6) is approximately between 75-125 kW, while the voltage received by each induction medium (6) is around 72-125 Vrms, and the current received in each induction medium (6) 4000-6500 Irms. The working frequency of the induction hardening system (1) is usually between 11-18 kHz, approximately.

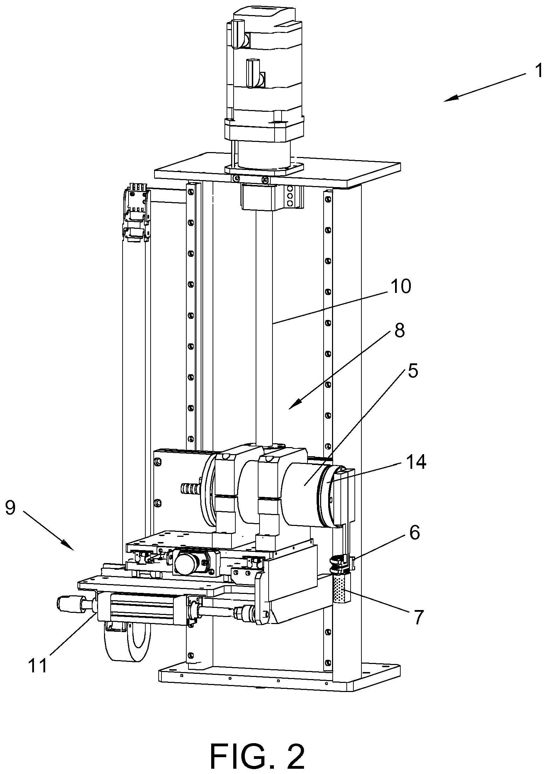

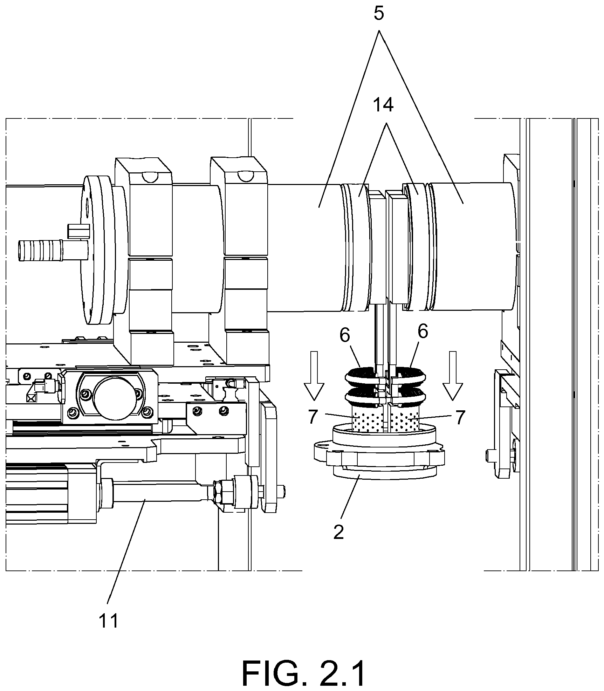

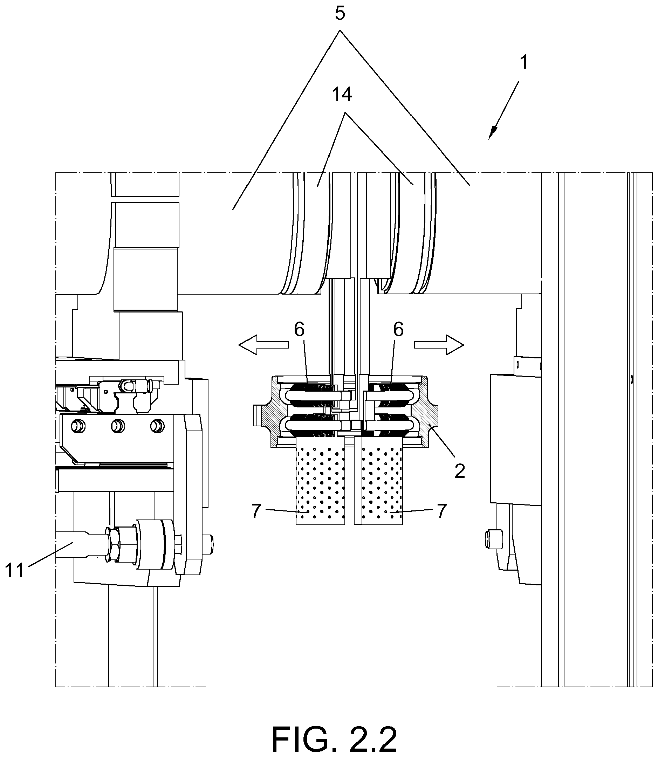

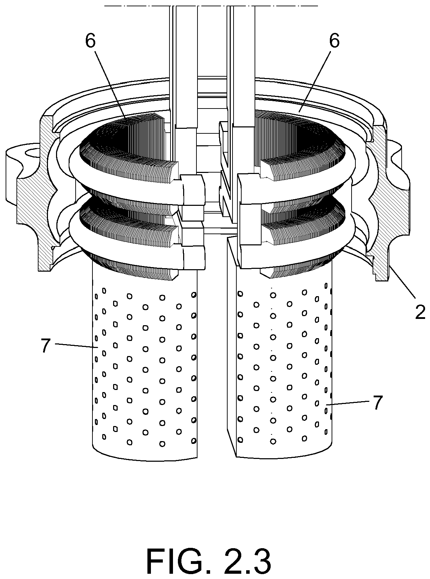

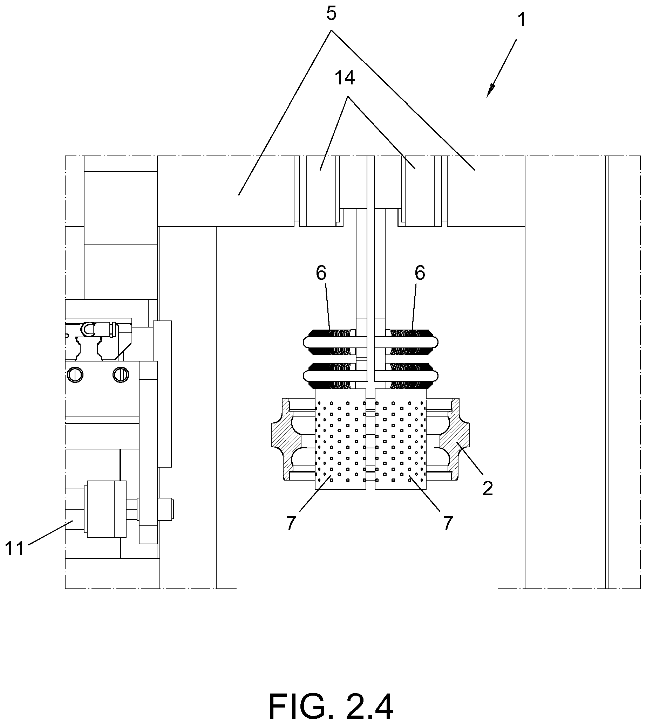

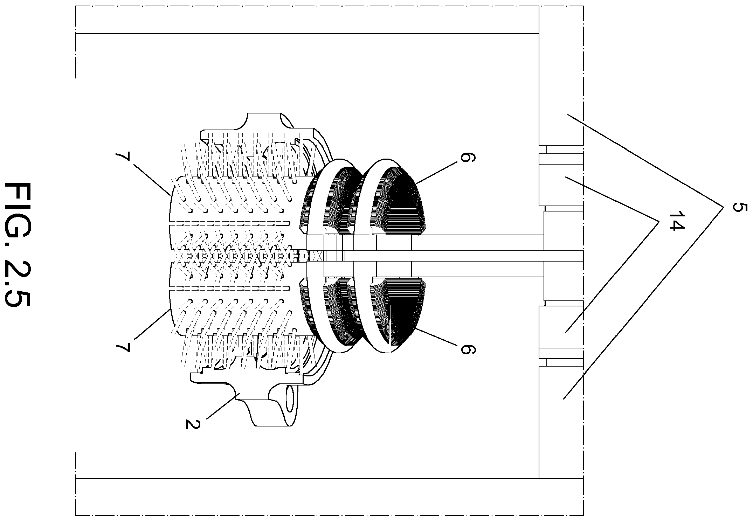

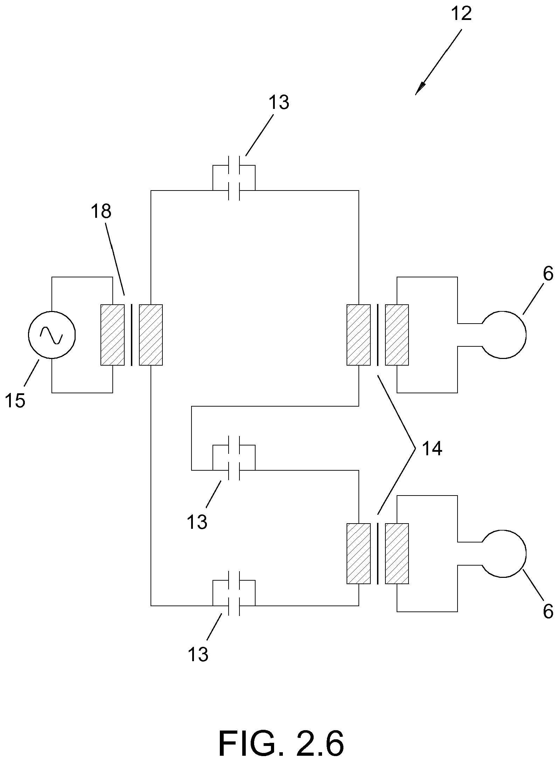

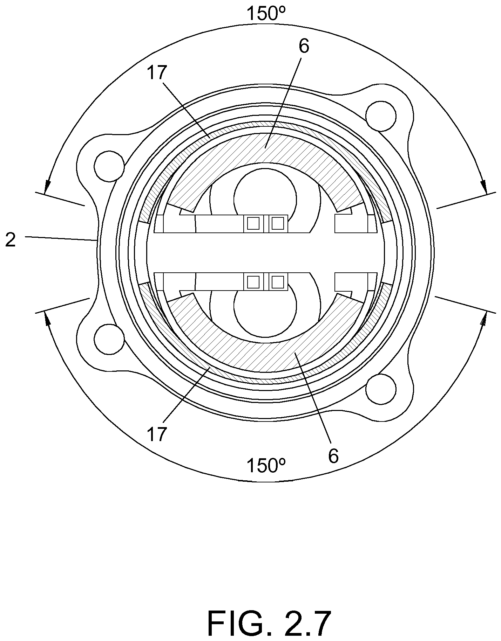

Figure 2 shows only half of the system (1) so that all its elements can be seen in detail. A single head (5) with an induction medium (6), and a quenching shower device (7) attached in turn to the induction medium (6) can be seen, while figure 2.1 shows the two halves which make up the system (1).

Initially, both induction media (6) are in the rest position (figure 2.1), i.e. as horizontally close to each other as though they were a single inductor. While the two induction media (6) are in the rest position (together), the diameter they form must be smaller than the interior diameter of the metal ring (2) to be heated, so that they can be introduced into said metal ring (2) and free up the mechanical interferences.

Once the two induction media (6) opposite each other have been introduced into the metal ring (2) to be heated (figure 2.2), both induction media (6) move from the rest position to the working position, where both induction media (6) separate from each other using the horizontal approximation system (9), and open, so that each half inductor (6) can be moved as close as possible, between 1-2 mm, to the walls of the inner surface of the metal ring (2) to be heated. The fact that the distance between the induction media (6) and the metal ring (2) to be heated is equal and very small allows energy to be transmitted to the metal ring (2) with high efficiency, thereby allowing greater efficiency in the heating.

Once in the working position (figure 2.3), the metal ring (2) is heated for the necessary time, generally between 5-8 seconds, to reach the austenitizing temperature, which is approximately between 850-1050°C.

By bringing the two induction media (6) as close as possible to the walls of the inner surface of the metal ring (2), more energy can be applied to the metal ring (2) in the same time; consequently, the heating times are short, unlike current systems. In addition, the effective section (17) covered by each half inductor (6) facing the metal ring (2) is approximately 150 degrees, i.e. 300 degrees in total with both induction media (6), whereas the effective section (16) of the conventional inductor (4) covers only 120 degrees.

Subsequently, once the austenitizing temperature is reached, both induction media (6) return to the rest position (together) by means of the horizontal approximation system (9) which separated them, and are now displaced vertically and simultaneously using the vertical approximation system (8) until they reach the shower position, and are kept in this shower position for the time necessary to obtain the hardening.

The invention also describes the method for induction hardening of metal rings (2), where the method comprises the following stages:
i) displacing simultaneously and vertically, using the system of vertical approximation (8), the two heads (5) arranged opposite each other, each with its respective induction medium (6), until both induction media (6) are introduced into the metal ring (2) to be heated, where said induction media (6) are in the rest position.
ii) bringing the two induction media (6) horizontally closer to the walls of the inner surface of the metal ring (2) using the horizontal approximation system (9),
iii) injecting current into the two induction media (6) to heat the metal ring (2) for a pre-established time until the austenitizing temperature is reached,
iv) returning the induction media (6) to the rest position and displacing them vertically and simultaneously until they reach the shower position,
v) showering the metal ring (2) with the two quenching shower devices (7) until hardening is obtained.

This method allows the life of both the metal ring (2) and the induction media (6) to be longer, as the density of current and the thermal stress are reduced by increasing the efficiency and having the induction media (6) working closer to the walls of the metal ring (2).

The present invention is not limited by the embodiment disclosed herein. Other embodiments can be made by persons skilled in the art in light of this description. In consequence, the scope of the invention is defined by the following claims.

## Claims

1. A system (1) for induction hardening of metal rings (2) **characterised in that** it comprises:
- two heads (5) arranged opposite each other, where each head (5) is attached to an induction medium (6),
- a system of vertical and simultaneous approximation (8) of the two heads (5) together with the two induction media (6) to the metal ring (2),
- a system of horizontal and simultaneous approximation (9) of the two heads (5) together with the two induction media (6) to the walls of an inner surface of the metal ring (2), and
- an oscillating circuit (12) which fixes a working frequency for the system (1),
where the system (1) is configured so that:
- the vertical approximation system (8) displaces simultaneously in a vertical direction the two induction media (6) until they are introduced into the metal ring (2),
- the horizontal approximation system (9) separates the two induction media (6) from each other, to bring each half inductor (6) closer to the walls of the inner surface of the metal ring (2) to heat it for a pre-established time, and
- displace the two induction media (6) vertically and simultaneously until they reach the shower position to obtain hardening of the metal ring (2).

2. A system (1) for induction hardening of metal rings (2) according to claim 1, **characterised in that** the vertical approximation system (8) comprises first guiding means (10) for vertical displacement of each head (5) with its respective induction medium (6).

3. A system (1) for induction hardening of metal rings (2) according to claims 1 or 2, **characterised in that** the horizontal approximation system (9) comprises second guiding means (11) for horizontal displacement of each head (5) with its respective induction medium (6).

4. A system (1) for induction hardening of metal rings (2) according to any of the previous claims, **characterised in that** each induction medium (6) comprises at a lower end a quenching shower device (7).

5. A method for induction hardening of metal rings (2) which uses the system (1) defined in claims 1 to 4, **characterised in that** it comprises the following phases:
i) displacing simultaneously and vertically, using the system of vertical approximation (8), the two heads (5) arranged opposite each other, each with its respective induction medium (6), until both induction media (6) are introduced into the metal ring (2) to be heated, where said induction media (6) are in the rest position.
ii) bringing the two induction media (6) horizontally closer to the walls of the inner surface of the metal ring (2) using the horizontal approximation system (9),
iii) injecting current into the two induction media (6) to heat the metal ring (2) for a pre-established time until the austenitizing temperature is reached,
iv) returning both induction media (6) to the rest position and displacing them vertically and simultaneously until they reach the shower position,
v) showering the metal ring (2) with the two quenching shower devices (7) until hardening is obtained.
